# EUROPEAN PATENT APPLICATION

(11) **EP 0 630 737 A1**
(43) Date of publication of application: **28.12.1994**
(21) Application number: 94108851.0
(22) Date of filing: 09.06.1994
(51) Int. Cl.: B29C 59/04, B29D 7/01

(54) **Sheet of plastic material, process for its manufacture and device for the application of the said process**

(30) Priority: 23.06.1993 IT GE930057
(71) Applicant: NESPAK S.p.A. Società Generale per L'Imballaggio, I-48024 Massa Lombarda, Ravenna (IT)
(72) Inventor: Boncompagni, Cesare, I-40026 Imola, Bologna (IT)
(74) Representative: Porsia, Bruno

(57) **Abstract**

The invention relates to a sheet of plastic material. According to the invention, the surface of at least one of its sides (101) has a miniature corrugation or micro-corrugation (2, 3). A further object of the invention is a process for the manufacture of the said sheet (1) by means of a pair of rolling cylinders (4, 5) with completely smooth rolling surfaces, in which the first rolling cylinder (4), on the side of the sheet (1) which is to be provided with the micro-corrugation (2, 3), known as the rolling and corrugating cylinder, is driven at a speed slightly greater than that of the opposing second rolling cylinder (4). For the application of the said process, the invention proposes a device comprising at least two rolling cylinders (4, 5) with completely smooth rolling surfaces, each being driven independently of the other by separate drive units (M4, M5) provided with means (304, 305) of continuous, independent regulation of the speed of rotation of the cylinders, on the basis of and with means (305) of controlling the ratio of the said speeds.

## Description

The invention relates to a sheet of plastic material. In particular, it relates to thermodeformable sheets of plastic material which are used as the starting materials for the manufacture of products, particularly containers, packaging, tubs, or the like.

The object of the invention is the production of a sheet of plastic material of the type described initially which, as a result of extremely simple and economical arrangements, has on at least one of its sides a surface which can be more easily gripped and is less slippery in all cases in which greater friction is required.

The invention achieves the said object with a sheet of plastic material of the type described initially in which the surface of at least one of its sides has a miniature corrugation or micro-corrugation.

Preferably the miniature corrugation or micro-corrugation will have an amplitude, in other words the distance between the bottoms of the depressions and the peaks of the projections of the micro-corrugations, of between 200 and 300 µm.

The micro-corrugations form a sequence of depressions and projections which are parallel to each other and have a development which is curvilinear and/or corrugated in a basically irregular way transversely with respect to their longitudinal extension (longitudinal corrugations). The longitudinal corrugation may be long or relatively short. The amplitude of the longitudinal corrugations exceeds the distance between two minima or two maxima, known as the pitch, of the micro-corrugations, by a factor which is at least twice the said distance.

The opposite side of the sheet of plastic material may, instead, be completely smooth.

As a result of the micro-corrugations, the sheet of plastic material can be gripped and retained more securely.

This is particularly advantageous in packaging containers which are made using the said micro-corrugated sheet, for example by thermoforming or similar processes. In this case, the outer surface of the said packaging containers consists of the side of the sheet provided with the micro-corrugations. The packaging container can therefore be handled, either manually or mechanically, with a more secure grip and can be held effectively by exerting smaller forces against the walls of the container. This enables the containers to be made with thinner sheets, while at the same time avoiding special shapes, for imparting greater rigidity, which make the moulds more complex and expensive, without running the risk of deformation, and particularly of compression of the containers and consequently of the products inside them. The curvilinear development or the development with transverse corrugations with respect to the longitudinal extension of the depressions and projections also extends the improved gripping effect in a direction basically parallel to the mean longitudinal direction of the micro-corrugation sequence, thus making it basically bidirectional.

In addition to the functional advantages described above, the micro-corrugation imparts a particular form of aesthetic external appearance to the sheet and to products manufactured from it.

A further object of the invention is a process for the manufacture of the said sheet with miniature corrugations or micro-corrugations which is particularly advantageous.

According to the said process, the sheet is produced by the rolling of heated plastic material between at least two rolling cylinders with completely smooth rolling surfaces, rotating in opposite directions and pressed against each other to a suitable degree, the first rolling cylinder, on the side of the sheet which is to be provided with the micro-corrugation, known as the rolling and corrugating cylinder, being driven at a speed slightly greater than that of the opposing second rolling cylinder, while the sequence of depressions and projections of the micro-corrugation extends basically transversely with respect to the direction of rolling of the sheet.

The ratio of the speed of the first rolling and corrugating cylinder to that of the second rolling cylinder is preferably between 102% and 110%.

Optimal results are obtained particularly when the ratio of the speed of the first rolling and corrugating cylinder to that of the second rolling cylinder is within the range from 104% to 106%.

The sheet of plastic material may be fed to the pair of rolling cylinders directly from an extrusion point, known as a die.

A device for the application of the said manufacture process comprises:
- a rolling unit with at least two cylinders parallel to each other and capable of being pressed to a suitable degree against each other by compression means, and having completely smooth outer peripheral rolling surfaces;
- an independent rotary drive unit for each rolling cylinder, for the rotary drive in opposite directions of the two rolling cylinders;
- means of regulating the speed of rotation of the two rolling cylinders;
- means of setting and displaying the speeds of rotation of the rolling cylinders;
- means of measuring the actual speed of rotation of each rolling cylinder;
- means of correlating and comparing the speeds of the two rolling cylinders, and of correcting the preset speed ratio.

The drive units advantageously consist of electric motors which are coupled to the corresponding cylinder by means of transmissions, while the said means of regulation, display, measurement, correlation and comparison and correction are preferably of the electronic type. The correction of the divergences between the nominal preset speed ratio and the nominal speed ratio may also be performed automatically by means of feedback loops acting on the means of regulation of the angular velocities of the motors.

In addition to the extreme simplicity and relative economy of the process and of the device for the manufacture of the sheet with miniature corrugations or micro-corrugations, the process and the device according to the invention enable a simple and rapid transition to be made from the manufacture of a conventional sheet with completely smooth surfaces on both sides to a sheet with a micro-corrugated surface on at least one of its sides. This is achieved simply by changing the ratio of the speeds of rotation of the two cylinders, and obviates the purchase of rolling and corrugating cylinders with a rolling surface which is not smooth and is suitably structured, and the replacement of one of the two smooth rolling cylinders with the textured rolling and corrugating cylinder at the time of transition from the manufacture of smooth sheets to micro-corrugated sheets and vice versa.

An additional object of the invention consists of other characteristics which further improve the sheet of plastic material, the process of manufacturing it and the device for the application of the said process, and which form the subject of the subsidiary claims.

The particular characteristics of the invention, and the advantages derived therefrom, will be demonstrated in greater detail by the description of a preferred embodiment, shown for illustrative purposes and without restriction in the attached drawings, in which:
Figs. 1 and 2 are plan views of the micro-corrugated sides of two details of sheets according to the invention;
Fig. 3 is a section along a plane perpendicular to the sheet and transverse with respect to the sequence of the micro-corrugations of a sheet as shown in Figures 1 and 2; and
Fig. 4 is a schematic view of a device for the manufacture of the micro-corrugated sheet according to the invention.

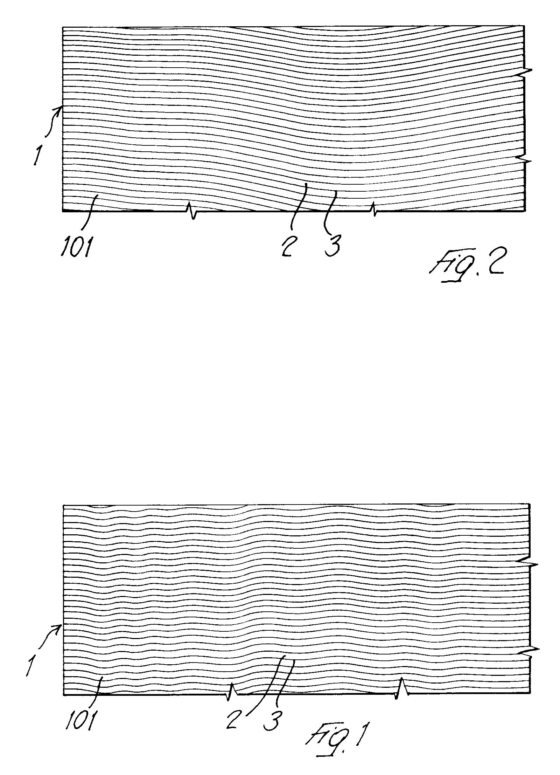

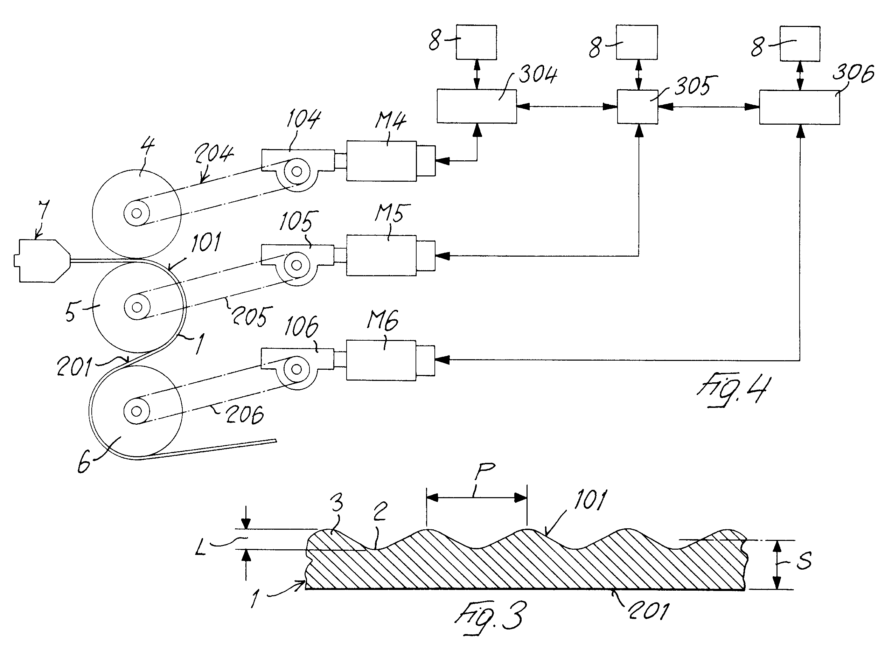

With reference to Figs. 1 to 3, a sheet of plastic material 1 has on at least one side a surface 101 provided with miniature corrugations or micro-corrugations. The surface 201 on the opposite side is instead completely smooth. In section along a plane perpendicular to the sheet 1 and transverse with respect to the sequence of depressions 2 and projections 3 of the micro-corrugation, the latter has a basically sinusoidal and regular development. The sheet has an overall thickness S, including the mean value of the corrugations, of between 450 and 950 µm. The amplitude A of the micro-corrugations, in other words the distance between the bottoms of the depressions 2 and the peaks of the projections 3, is between 200 and 300 µm. The pitch P of the micro-corrugation, in other words the distance between the peaks of two successive projections 3 or depressions 2, is between 1 and 1.5 mm.

The depressions 2 and the projections 3 of the micro-corrugation extend parallel to each other on the surface of the sheet 1 (Figs. 1 and 2) and have a curvilinear development along their longitudinal extension. In particular, they may have a development which is basically corrugated in the transverse direction with respect to their longitudinal extension (longitudinal corrugation). The longitudinal corrugation may be more or less regular and may have different amplitudes which extend by an amount corresponding to at least twice the pitch P of the micro-corrugation. The pitch of the longitudinal corrugation of the depressions 2 and of the projections 3 may be short or of considerable length with respect to the pitch P of the micro-corrugations.

The micro-corrugated sheet 1 may be made of any plastic material, and particularly of thermodeformable material. It may or may not be transparent. In transparent sheets, the micro-corrugation does not significantly impair the possibility of seeing through the sheet, causing only a slight optical deformation of profiles.

With reference to Fig. 4, a device for the manufacture of the said micro-corrugated sheet comprises a rolling unit consisting of a rolling and corrugating cylinder 4, a second lower and parallel rolling cylinder 5 and an additional extraction cylinder 6 which is orientated parallel to the two upper rolling cylinders 4 and 5. The cylinders 4, 5 and 6 have completely smooth peripheral surfaces. The upper rolling and corrugating cylinder 4 is supported so that it can be pressed with a certain force against the second lower rolling cylinder 5. The compression intensity is that normally used in rolling processes for the manufacture of sheets of plastic material, so that the sheet is pressed against the surfaces of the two cylinders 4 and 5 and is smoothed, cooled and shaped.

The extraction cylinder 6 is located at a distance from the intermediate rolling cylinder 5 above it.

The sheet of plastic material is fed in a heated state at a normal rolling temperature, between the rolling and corrugating cylinder 4 and the lower rolling cylinder 5, from an extrusion unit indicated schematically as a die 7 located upstream of the cylinders 4 and 5.

The cylinders 4, 5, and 6 are preferably cooled, with cooling water for example.

The cylinders 4, 5, and 6 are driven in rotation about their axes in opposite directions to each other, each independently of the others, by electric motors M4, M5, and M6 associated with them. Each motor M4, M5, M6 is connected to the corresponding cylinder 4, 5, 6 by means of an associated reduction unit 104, 105, 106 and a transmission 204, 205, 206 which for example may be of the belt, chain, or similar type.

The motors M4, M5, M6 are supplied by controllers 304, 305, 306. The controllers 304, 305, 306 are associated with units, indicated by 8, for setting and displaying the angular velocities at which the cylinders 4, 5, 6 are driven. The motors M4, M5, M6 may be associated with means of measuring the actual angular speed at which the cylinders 4, 5, 6 are driven, which emit a signal proportional to the actual velocity and are connected to the controllers 304, 305, 306. The said signals proportional to the actual velocities of the cylinders 4, 5, 6 may be sent to feedback circuits which automatically regulate the actual driving speed so that it is kept basically identical to the nominal driving speed which has been set. For this purpose, the controllers 304, 305, 306 are provided with speed regulating means which are controlled by means for comparing the signals proportional to the actual speeds with the nominal driving speeds of the cylinders 4, 5, 6.

In particular, to ensure that the cylinders 4, 5, 6 are always driven with a correct ratio of their angular velocities, the controller 305 of the driving motor M5 of the intermediate rolling cylinder 5 also checks the actual measured speeds of the other two cylinders 4 and 6, being provided with inputs for the corresponding measurement signals. It therefore controls the ratio of the driving speed of the rolling and corrugating cylinder 4 to that of the extraction cylinder 6 with respect to the driving speed of the intermediate rolling cylinder 5, and has its control output connected to the controllers 304, 306 of the other two cylinders 4, 6. The controller 305 therefore also governs the said controllers 304, 306 so that in all cases the preset ratio of the speeds of the cylinders 4, 5, 6 is kept unchanged, by suitably regulating through the said controllers the driving speeds of the cylinders 4, 6 in the desired ratio with respect to the speed of the cylinder 5.

The system described above has advantages of simplicity and economy when the motors used as the electric driving motors are of the type known as brushless motors, since they have integral electronic regulation and control systems comprising at least part of the means indicated above.

When the angular velocity of the rolling and corrugating cylinder 4 is identical to the angular velocity of the intermediate rolling cylinder 5, the sheet of plastic material produced by the rolling has a completely smooth surface on both the sides 101 and 201.

To produce a micro-corrugated sheet according to the invention, it is simply necessary to increase the speed of the upper rolling and corrugating cylinder 4 by an amount such that the ratio of its angular velocity to that of the rolling cylinder 5 is within the range from 102% to 110%.

These conditions give a micro-corrugation of the surface on the side 101 of the sheet pressed against the upper rolling and corrugating cylinder 4 which rotates at a higher speed.

Optimal results in relation to the micro-corrugation are obtained when the ratio of the speed of the rolling and corrugating cylinder 4 to that of the rolling cylinder 5 is within the range from 104% to 106%.

The other parameters of the process, such as the temperature of the plastic material, the pressure of the cylinders 4 and 5 on the material and any other parameters, may remain the same as those specified for the manufacture of a sheet which is smooth on both sides.

The micro-corrugated sheet according to the invention is particularly suitable for the manufacture by thermoforming of packaging containers of any type, such as tubs for the packaging of foodstuffs, for example fruit or similar. In this case, the micro-corrugated sheet is disposed in the moulds in such a way that its side having the micro-corrugated surface forms the outer surface of the packaging containers.

## Claims

1. Sheet of plastic material, characterized in that the surface of at least one of its sides (101) has a miniature corrugation or micro-corrugation (2, 3).

2. Sheet according to Claim 1, characterized in that it consists of thermodeformable plastic material.

3. Sheet according to Claim 1 or 2, characterized in that the miniature corrugation or micro-corrugation has an amplitude (A), in other words the distance between the bottoms of the depressions (2) and the peaks of the projections (3) of the micro-corrugations, of between 200 and 300 µm.

4. Sheet according to Claim 3, characterized in that the pitch (P) of the micro-corrugation, in other words the distance between two successive peaks of the projections (3) or between two successive minima of the depressions (2), is between 1 and 1.5 mm.

5. Sheet according to one or more of the preceding claims, characterized in that the overall thickness (S) of the sheet, including the mean distance between the bottoms of the depressions (2) and the peaks of the projections (3), is between 450 and 950 µm.

6. Sheet according to one or more of the preceding claims, characterized in that the micro-corrugations form a sequence of depressions (2) and projections (3) which are parallel to each other and have a development which is curvilinear and/or corrugated in a basically irregular way transversely with respect to their longitudinal extension (longitudinal corrugations).

7. Sheet according to Claim 6, characterized in that the longitudinal corrugation may be long or relatively short and in that its amplitude exceeds the pitch (P) of the micro-corrugations (2, 3) by a factor which is at least twice the said pitch.

8. Sheet according to one or more of the preceding claims, characterized in that the side (201) of the sheet (1) opposite the side (101) provided with micro-corrugations (2, 3) may be completely smooth.

9. Packaging container, particularly for food products, especially for agricultural products, characterized in that it consists of a sheet of thermoplastic material (1) according to one or more of the preceding claims, the outer surface of the said container consisting of the surface of the side (101) of the sheet (1) provided with the micro-corrugation (2, 3).

10. Process for the manufacture of the sheet of plastic material according to one or more of the preceding claims and provided with a micro-corrugation (2, 3) on only one of its sides (101), characterized in that the sheet (1) is produced by the rolling of heated plastic material between at least two rolling cylinders (4, 5) with completely smooth rolling surfaces, rotating in opposite directions and pressed against each other with the normal pressure for rolling processes, the first rolling cylinder (4), on the side of the sheet (1) which is to be provided with the micro-corrugation (2, 3), known as the rolling and corrugating cylinder, being driven at a speed slightly greater than that of the opposing second rolling cylinder (4), while the sequence of depressions (2) and projections (3) of the micro-corrugation extends basically transversely with respect to the direction of rolling of the sheet (1).

11. Process according to Claim 10, characterized in that the ratio of the speed of the first rolling and corrugating cylinder (4) to that of the second rolling cylinder (5) is between 102% and 110%, and preferably between 104% and 106%.

12. Process according to Claim 10 or 11, characterized in that the sheet of plastic material (1) may be fed to the pair of rolling cylinders (4, 5) directly from an extrusion point (7), for example from what is known as a die.

13. Device for the application of the manufacture process according to one or more of the preceding Claims 10 to 12, characterized in that it comprises:
- a rolling unit with at least two rolling cylinders (4, 5), one above the other and parallel to each other and capable of being pressed to a suitable degree against each other by compression means, and having completely smooth outer peripheral rolling surfaces;
- an independent rotary drive unit (M4, M5) for each rolling cylinder (4, 5), for the rotary drive in opposite directions of the two rolling cylinders (4, 5);
- means (304, 305) of continuous, independent regulation of the speed of rotation of the two rolling cylinders.

14. Device according to Claim 13, characterized in that it also comprises:
- means (8) of setting and displaying the speeds of rotation of the rolling cylinders (4, 5);
- means of measuring the actual speed of rotation of each rolling cylinder (4, 5);
- means (304, 305) of regulating by feedback the actual driving speeds of the rolling cylinders (4, 5) to match the preset nominal speed (8).

15. Device according to Claim 13 or 14, characterized in that it comprises means (304, 305) of correlating and comparing the speeds of the two rolling cylinders (3, 4) and of correcting the preset speed ratio of the two rolling cylinders (4, 5), operating particularly by feedback.

16. Device according to one or more of the preceding Claims 13 to 15, characterized in that the rotary drive means consist of electric motors (M4, M5) connected dynamically to the associated cylinder (4, 5) by means of a reduction unit (104, 105) and a transmission (104, 105) and each controlled by a separate controller (304, 305).

17. Device according to Claim 16, characterized in that the means of correcting the ratio of the drive speeds of the two rolling cylinders (4, 5) consist of the controller (305) of one of the said cylinders (5), preferably that of the lower rolling cylinder (5), the said controller (305) also governs the controller (304) of the upper rolling cylinder (4), known as the rolling and corrugating cylinder, to control the ratio of the speeds of the two cylinders (4, 5).

18. Device according to one or more of the preceding Claims 13 to 17, characterized in that the electric motors (M4, M5) are of the type known as brushless motors.

19. Device according to one or more of the preceding Claims 13 to 18, characterized in that it has an additional extraction cylinder (6) orientated parallel to the rolling cylinders (4, 5) and located in alignment with and under the lower rolling cylinder (5), the said extraction cylinder (6) also being driven independently of the others by means of a drive unit (M6, 106, 206) controlled by a similar controller (306) governed by the controller (305) of the lower rolling cylinder (5).

20. Device according to one or more of the preceding Claims 13 to 19, characterized in that it has an extrusion point (7) located upstream of the rolling cylinders (4, 5).

21. Device according to one or more of the preceding Claims 13 to 20, characterized in that it has three parallel and counter-rotating rolling cylinders which are vertically aligned with each other and of which the upper and lower rolling cylinders are supported so that they may be pressed against the intermediate rolling cylinder, the sheet being made to pass between the upper rolling cylinder and the intermediate cylinder and then in the opposite direction between the intermediate and the lower cylinder, each rolling cylinder being driven in rotation independently of the other two.

22. Device according to one or more of the preceding Claims 13 to 21, characterized in that the rolling cylinders (4, 5) may be cooled, particularly with cooling water.
